# EUROPEAN PATENT SPECIFICATION

(11) **EP 2 625 063 B1**
(45) Date of publication and mention of the grant of the patent: **27.01.2016**
(21) Application number: 11770143.3
(22) Date of filing: 29.09.2011
(51) Int. Cl.: B60P 1/02

(54) **A VEHICLE CHASSIS**
FAHRGESTELL
CHÂSSIS DE VÉHICULE

(30) Priority: 06.10.2010 GB 201016815
(43) Date of publication of application: 14.08.2013
(73) Proprietor: Roadload Limited, Thetford Norfolk IP24 1HG (GB)
(72) Inventor: JONES, Keith, Thetford Norfolk IP24 1HG (GB); LAMBERT, William, Thetford Norfolk IP24 1HG (GB)
(74) Representative: Stratagem IPM Limited
(86) International application number: PCT/GB2011/051846
(87) International publication number: WO 2012/046027

(56) References cited:
- DE-U1- 20 111 901
- GB-A- 2 468 031
- US-A1- 2010 104 408

## Description

### Field of the Invention

The invention relates to vehicle chassis and in particular to vehicle chassis with a U shaped rear chassis incorporating an integral lifting means for picking up a load.

In the context of this application the term "vehicle cabin" is to be interpreted broadly to incorporate a cabin with a motive device and one or more wheeled axles which is capable of being attached directly, or, indirectly to a rear chassis via a trailer type connection.

Also, in the context of this application the term "vehicle chassis" is to be interpreted broadly to incorporate a chassis structure that may form part of a rigid or articulated vehicle.

### Background to the Invention

Most truck loading and unloading involves loading bays, ramps, tail lifts, fork lift trucks or manual lifting. These known systems of picking up and transporting a load are inefficient, inflexible, require large spaces, multiple handling of goods and incur safety risks, as they require the vehicle present during loading, the load bearing platforms and boxes are difficult to interchange, and they require ramps, tail lifts or other equipment to unload and load from ground level all of which require significant space at the back of the vehicle and have recorded safety risks. The alternative of manual loading (passing items up to someone in the vehicle or climbing up with the items) also incurs safety risks and is impractical for all but the lightest of loads.

The problem which the invention address may be defined as how to improve the loading and unloading of a variety of platforms or boxes onto a vehicle chassis, reduce goods handling and facilitate safe ground level loading of those platforms or boxes while requiring very little loading space at the rear of the vehicle and achieving a high available payload within the vehicle rating for the goods to be transported.

### Prior Art Known to the Applicant

Apart from the loading techniques mentioned above the Applicant is also aware of a number of demount systems including telescopic or detachable stilts which can be used to support the load while the vehicle is driven out from underneath and crane systems, built onto the vehicle, to permit self unloading. The stilt systems leave the user with the challenge of lowering the load to a usable height. Crane systems require heavy vehicle mounted equipment which reduces the payload capacity available for goods.

The closest prior art known to the Applicant are 'U' shaped chassis which can be reversed around a load and which use chassis integral lifting apparatus to lift and secure the load for transport. Existing examples of such art include Tollefson (US 2008/0253872 A1) for a trailer unit with parallel lifting arms which engage with a ledge on the container and Netras (EP 1652725 / US 2007253801) for a vehicle chassis which employs a three point vertical lifting system. A further approach, as yet unpatented, is by Coxx Mobile Systems in Belgium which lowers the vehicle on its suspension to allow two lifting tynes to engage in channels at the bottom of the load. These apparatus leave the 'U' frame unsupported across its middle or open end and, consequently, require a very strong 'U' frame which adds significantly to the cost and weight of the vehicle. This has resulted in products which either have little available payload for goods and / or which are so expensive they are confined to market niches.

DE20111901 describes a 'U' shaped chassis having three rotating arms for lifting a load from a first position to a second position.

In addition to the above mentioned, the following prior art are acknowledged:
US 5879122 A
SE 358854 B
EP 0983898 A1
DE 29906239 U1
DE 7514913 U
DE 9002528 U1
WO 96/34778 A
US 2547269 A
FR 2097767
DE 8904384 U

### Summary of the Invention

In a first broad independent aspect, the invention provides a substantially 'U' shaped vehicle chassis, with an openable end facing to the rear; wherein the area bounded by the chassis footprint is substantially free of any obstruction impeding the lifting and lowering of the load in use; the chassis comprising a plurality of rotating lifting arms, pivoted at one end with the non-pivoted ends which engage four corresponding pick-up points on a load; the rotating lifting arms engage a load in a first position and deposit said load on said chassis in a second position; characterised in that the chassis is attached, in use, by means of a fixed rigid connection to a vehicle cabin for travel, said fixed rigid connection comprising a first attachment member defined by the chassis and co-operable with a second attachment member defined by a vehicle cabin, and which chassis provides an engagement bracket, close to the chassis wheels, for a knuckle fitting, incorporated into each side of the load, to engage, and characterised in that the plurality of rotating lifting arms comprise four rotating lifting arms.

This configuration is particularly advantageous because it enables the vehicle to carry interchangeable loads and to lower them to ground level within the footprint of the vehicle for easy, safe, loading. The loads are detachable, which allows the load to be dropped off for loading or storage, while the vehicle is used for other deliveries.

Other advantages of this configuration include that it facilitates the loading and unloading of loads within a small area at the rear of the vehicle and that it enables the vehicle incorporating the vehicle chassis to quickly and efficiently engage and disengage interchangeable loads without any obstruction from other parts of the vehicle.

Preferably, each rotating lifting arm is substantially triangular in shape and is pivotally attached to the chassis substantially towards a first vertex; a connecting member is pivotally attached to the rotating lifting arm substantially towards a second vertex; an engagement means is disposed substantially towards a third vertex, which in use, engages and disengages with the load.

This configuration is particularly advantageous because it enables the lifting arm to be pivotally attached to the chassis while transferring the power from the attached actuator device to the attached engagement means that engages with the load. The triangular shape provides substantial mechanical strength which prevents the lifting arm from distorting when lifting the load.

More preferably, connecting member is pivotally attached at one end to a first rotating lifting arm substantially towards one vertex and the opposite end of the connecting member is pivotally attached to a second rotating lifting arm substantially towards one vertex, which in use, synchronises the rotational movement of the first rotating lifting arm to the second rotating lifting arm.

This configuration is particularly advantageous because it transfers the lifting power from the first rotating lifting arm to the second rotating lifting arm and synchronises the movement of the two sets of lifting apparatus so that they engage the load simultaneously.

Preferably, each rotating lifting arm further incorporates a lever member attached at one substantially towards the first vertex and the opposite end is attached to an actuator device.

This configuration is particularly advantageous because it provides the means of pushing the rotating to an elevated position, so that the engagement means engages and lifts the load. It also provides the means of pulling the lifting means to a lowered position, so that engagement means drops and disengages with the load.

Preferably, the engagement means disposed on each rotating lifting arm is a substantially circular cross sectioned bar which incorporates a flat portion, which in use, engages with a flat portion incorporated within the engagement bracket of each pick up point of the load.

This configuration is particularly advantageous because it enables the engagement means to engage with the load mounted engagement bracket whilst the lifting arm rotates. As the lifting arm rotates into an elevated position, the engagement means rotates in relation to the load mounted engagement bracket until the flat portion of the engagement means, engages with the flat portion within the load mounted engagement bracket, therefore locking the load into position for transit.

Preferably, said chassis mounted engagement bracket located near the wheels is in the form of a slot for the engagement of a knuckle fitting, incorporated into each side of the load.

This configuration is particularly advantageous because it braces the open end of the 'U' shaped vehicle chassis, to provide improved rigidity and safety of the chassis while on the move reducing the strength requirement at the front of the 'U' frame; the pivoted member braces the chassis even when the load is not being carried.

Preferably, a corresponding load interface to be built into a load or load platform to enable it to be engaged by the chassis and deposited on said chassis, such interface incorporating four pick-up points which correspond to the chassis rotating lifting arm non-pivoted ends and a knuckle type fitting, incorporated into each side of the load or load platform.

This configuration is particularly advantageous because it provides a load platform, such as a container, flat deck or other form of load bearing or containing structure built onto it, which attaches to a vehicle and can be picked up and dropped off quickly and easily. The rotating lifting arms of the chassis engage with the pick up points of the load so that it is suspended from the front and rear rotating lifting arms. The load platform provides support for the load and provides the bracing of the 'U' shaped chassis frame.

More preferably, each of the four pick up points is substantially a hook configuration.

This configuration is particularly advantageous because it provides a quick and easy method of engaging / disengaging the load with the chassis. Therefore, once the load has been deposited on to the ground, no further subsequent actions are to the vehicle or the load.

More preferably, the hook configuration incorporates a flat portion, which in use, engages with a flat portion incorporated within the engagement means disposed on each lifting arm.

This configuration is particularly advantageous because it cooperates with the flat portion of the engagement means of the chassis and therefore locks the load into position on the chassis, for transit.

More preferably, each said knuckle fixing is substantially mushroom shaped, and whereby each said knuckle fitting incorporates a narrow section between the mushroom and the load to engage in the corresponding slot in the vehicle chassis, which in use, restricts the relative sideways movements of the load and the chassis.

This configuration is particularly advantageous because it engages with the corresponding slot of the engagement bracket on the chassis. The engagement of the narrow section within the slot maintains the position of the load and restricts any lateral movement of the load in relation to the chassis

A vehicle chassis further comprising a pivoted supporting member disposed across said openable end configuration.

Preferably, each said knuckle fitting is located substantially at the middle of each side of the load.

This configuration is particularly advantageous because, when the supporting member is in its lowered position, it braces the open end of the 'U' shaped chassis and provides 'underrun' protection for when the vehicle is not carrying a load. Furthermore, this configuration also provides a means of mounting rear facing lights and number plates or the like to chassis.

Preferably, said chassis is configured in an open end configuration, whereby said vehicle, in use, positions the open end of said chassis about said load to facilitate the engagement of said load to said chassis.

This configuration is particularly advantageous because it enables the vehicle incorporating the vehicle chassis, to reverse up to the load to accommodate the load within the open end of the chassis, prior to depositing the load onto the chassis.

Preferably, said lifting apparatus is a four arm rotational lifting system with two over-wheel hub connecting bars to link the forward lifting arms with the rear lifting arms and a cross member connecting the two forward lifting arms, which in use, engages and pivots said load over said wheels.

This configuration is particularly advantageous because it enables the vehicle chassis to quickly and efficiently engage the load to lift it off the ground in one continuous motion. The geometries of the connecting bar and the lifting arms provide sufficient clearance between the bottom surface of the load and the ground while allowing sufficient clearance to enable loads to be picked up from many sloping or uneven ground surfaces.

Preferably, said lifting arms and connecting bars are opposed in relation to each other in a parallel configuration.

This configuration is particularly advantageous because it provides a means of attaching said lifting means to the chassis, while facilitating the continuous movement of lifting or dropping of the load from vehicle chassis.

Preferably, further comprising two hydraulic rams disposed, one each side of the vehicle, between the forward positioned of said lifting arms and said chassis.

This configuration is particularly advantageous because it provides the means of pushing said lifting means to an elevated position, so that it engages and lifts said load. It also provides the means of pulling said lifting means to a lowered position, so that it drops and disengages said load.

The invention provides a stub axle wheel mount, for use in a vehicle chassis, comprising a bracket, rotatable attachment means which, in use, attaches a wheel to said bracket wherein, said bracket positions said wheel within the vehicle chassis to optimise the width of the vehicle.

This configuration is particularly advantageous because wide loads can be carried between the wheels and makes possible the lowering of loads up to 1.9 metres wide, therefore keeping the overall width of the vehicle within the regulation 2.5 metres.

This configuration is particularly advantageous because it attaches the wheel assembly to the wheel chassis, while facilitating the vertical movement of the wheel.

This configuration is particularly advantageous because it provides a means of attaching said lifting means to the chassis, while facilitating the continuous movement of lifting or dropping of the load from vehicle chassis

More preferably, the other end in relation to said pivotal attachment is attached to a suspension member.

This configuration is particularly advantageous because the suspension member reduces the vertical movement of the wheel, thereby preventing the wheel from impacting on the vehicle chassis while providing a means of suspension.

The invention is a versatile truck rear half chassis with an empty space between two side frames incorporating stub axle mounted wheels. The side frames incorporate a lifting mechanism. It can carry interchangeable loads, lowering them to ground level within the footprint of the vehicle for easy, safe, loading. The loads can detach allowing the load to be dropped off for loading or storage while the vehicle is used for other jobs. The chassis can be connected to a standard front wheel drive van cabin.

### Brief Description of the Figures

Figure 1 shows a plan view of an open-backed vehicle chassis in accordance with the preferred embodiment of the invention.
Figure 2 shows a side view of the in accordance with view AA in Figure 1, with the lifting apparatus in a lowered position showing the pick-up points and the load bracing cross member engagement point.
Figure 3 shows a side view of the in accordance with view AA in Figure 1, with the lifting apparatus in a raised position.
Figure 4 shows a side view of a typical load with the front and rear lifting points and engagement knuckle fixings for bracing the open end of the 'U' shaped chassis, whilst being incorporated into each side of the load.
Figure 5 shows chassis view of the lifting arm geometry including the lifting bar and the corresponding load mounted hook shaped lifting point in its loaded and lowered positions.
Figure 6 shows a view of the pivoted supporting member at the rear of the vehicle in its raised and lowered positions.
Figure 7 shows a side view of the stub axle wheel mount assembly.
Figure 8 shows an upper cross sectional view of the stub axle wheel assembly.

### Detailed Description of the Figures (needs updating once figures determined)

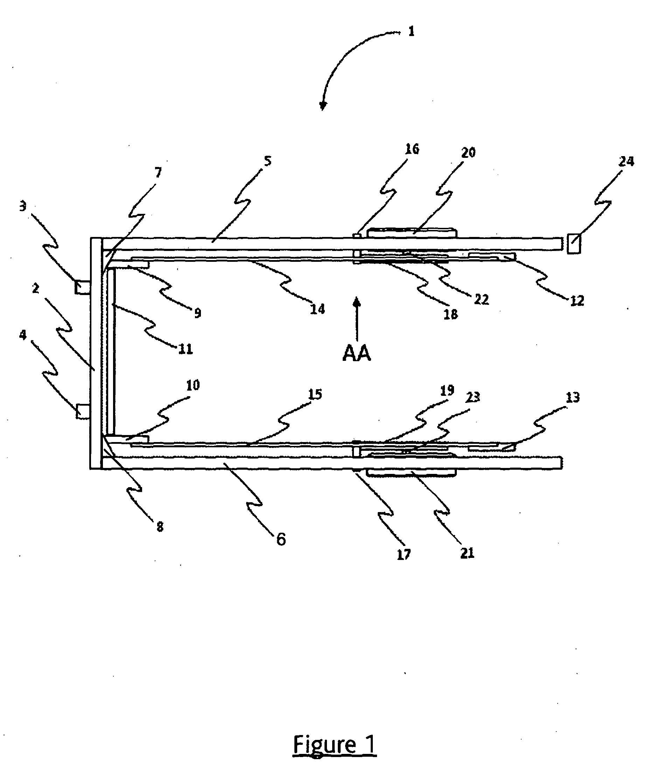

Figure 1 shows an upper plan view of the preferred invention, which is a vehicle chassis that is attachable to a standard front wheeled drive truck cabin (not shown). The chassis is generally indicated by 1, and is configured in an open-ended configuration, such as the "U" shaped configuration shown. The closed end portion 2 of the chassis 1 is positioned towards where the cabin would be located. The closed end portion 2 has two perpendicular attachment members 3 and 4, which are inserted into the chassis connectors of the cabin. Two supporting members 5 and 6 trail horizontally from either end of closed end portion 2 along an axial direction. Two supporting plates 7 and 8 are attached to the inner surfaces of the two trailing supporting members 5 and 6, and the inner surface of the closed end portion 2 to strengthen the attachment of supporting members 7 and 8 to end portion 2. The front lifting apparatus 9 and 10 are each powered by actuator devices and are linked mechanically with an axle 11 on which they both pivot to coordinate their movement. Two independently pivoted sets of rear lifting apparatus 12 and 13 are linked to the front lifting apparatus through connecting bars 14 and 15, synchronising their movement with the front lifting apparatus and, indirectly, with each other. The trailing arm members 5 and 6 incorporate attachment members 16 and 17 for pivotally attaching suspension arms 18 and 19 to the vehicle chassis 1. The suspension arms 18 and 19 are further attached to the wheels 20 and 21 via the wheel mount assemblies 22 and 23 which incorporate a rotatable attachment means such as stub axles.

The weight of the chassis 1 is reduced by constructing the frame of the chassis from tubular materials, such as box section tubing etc, which provides more weight allowance for the payload.

In one embodiment of the invention, a supporting bar member 24 is pivoted at the rear on the driver's side of the vehicle. Shown end-on in its open, vertical position, in Figure 1, it allows access to the inside of the U frame. In its lowered, horizontal position it closes the end of the U frame adding rigidity for safe transit, providing rear under-run protection and a suitable surface for rear lights and number plate mounting.

In use, the chassis 1 is attached to the vehicle cabin, by the two attachment members 3 and 4, which are bolted to a second pair of attachment members, such as interfacing brackets that interface the chassis 1 to the chassis connectors of the cabin. Therefore enabling the chassis to be attached to a variety of truck cabins from different manufacturers. The open ended configuration of chassis 1 provides a flexible load space which enables one or more loads to be picked up from and dropped off at ground level. The vehicle incorporating the chassis is reversed up to a load and accommodates the load within the carrying space of the chassis 1. Once the load has been located within the carrying space of the chassis 1 the lifting apparatus 9, 10, 12 and 13 engage with corresponding lifting points on the sides of the load. The invention provides a "U" shaped chassis along with attached wheels, which fits within the regulation 2.5 metres width for road-going vehicles. The stub axle mounted wheels 20 and 21 and lifting apparatus 9, 10, 12 and 13 to enable the chassis to carry loads of up to 5.5 metres long by 1.9 metres wide and three tonnes in weight (subject to the vehicle rating and cabin loading).

In an alternative embodiment of the invention, the open backed configuration of the chassis may be formed into alternative open backed configurations including "V" or "Y" configurations.

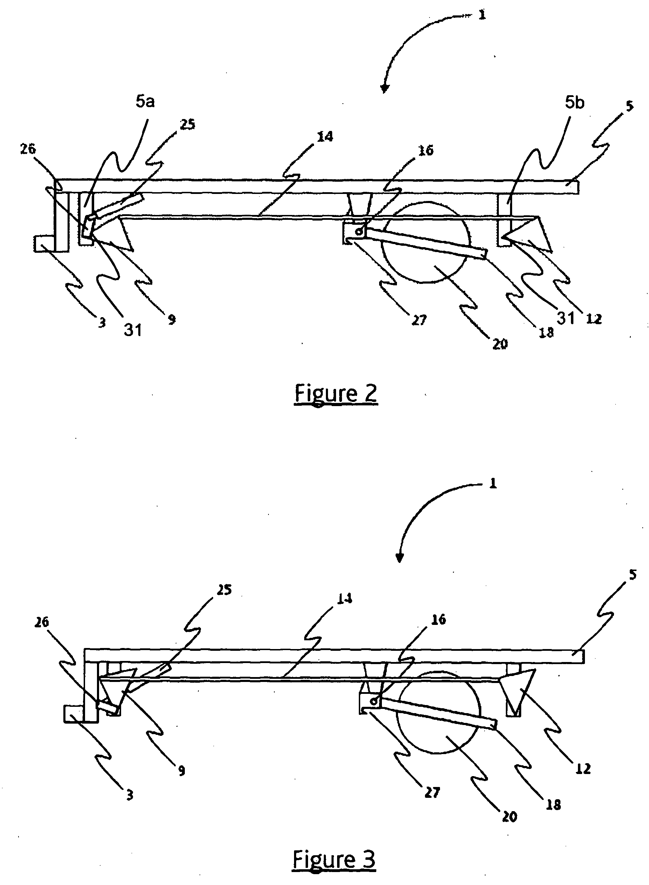

Figure 2 shows an inner side view of the vehicle chassis 1, as indicated by arrow AA in Figure 1. The lifting apparatus 9 and 12 are shown in a lowered configuration over the wheel suspension arm 18. Near one vertex of each of the substantially triangular shaped front and rear lifting apparatus 9 and 12 the apparatus are pivotally attached to pillars 5a and 5b coming down from the trailing supporting member 5. The connecting bar 14 connected at a pivot near a second vertex of each of the substantially triangular shaped front and rear lifting apparatus 9 and 12 transfers lifting power from the front lifting apparatus to the rear lifting apparatus and synchronises the movement of the two sets of lifting apparatus. Near the third vertex of each of the substantially triangular shaped front and rear lifting apparatus 9 and 12 is located the engagement apparatus for engaging with and picking up the load. The actuator device 25, such as a hydraulic or pneumatic ram, connects via a lever 26 to the lifting apparatus axle 11, shown in Figure 1, with the front lifting apparatus 9 which rotates as the actuator device 25 extends or retracts.

The lifting apparatus connection bar 14 is parallel to the ground and to the trailing supporting arm member 5 of the chassis 1. In the lowered position, the lifting apparatus 9 and 12 are rotated into positions in which their engagement apparatus are lower than their main pivot points 31 and 31a at which they connect to the chassis. This facilitates the pick-up and drop-off of a load, which has one or more lifting points that suspend the base of the load from these engagement apparatus.

Close to the suspension arm pivot 16 is a load bracing cross member engagement slot 27. As the lifting apparatus lifts the load to close to its transit position a knuckle on each end of the bracing cross member in the bottom of the load is moved into this slot 27 to provide bracing across the middle of the U frame adding rigidity to the structure while the load is in position and strengthening the structure for transit.

Figure 3 shows the same inner view of the vehicle chassis as shown in Figure 2, but with the lifting rail in a raised configuration. The actuator device 25 rotates the front lifting apparatus 9 anti-clockwise, as viewed in Figure 3, which raises the engagement apparatus near the third vertex of the substantially triangular shaped front lifting apparatus 9 to close to the highest position of its arc and pulls the rear lifting apparatus 12 into position through the connection bar 14. In the raised position, and throughout the raising motion, the connection bar 14 remains above the suspension arm 18 and the suspension arm pivot 16.

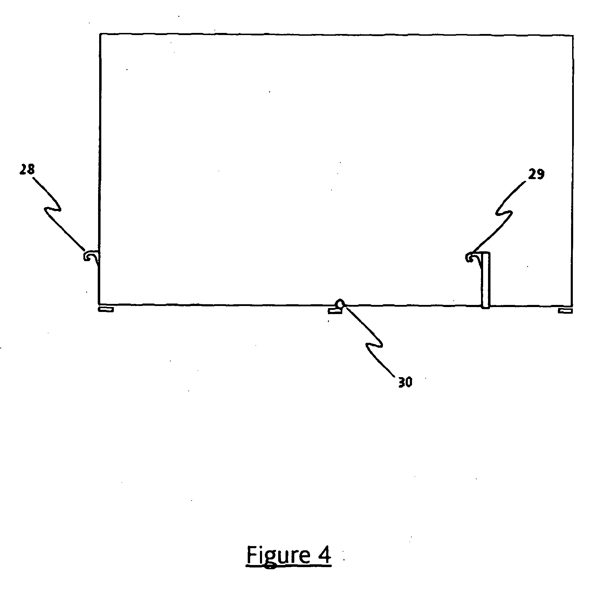

Figure 4 shows the hook shaped lifting points on a typical load. The front hook shaped lifting point 28 engages with the front lifting apparatus 9 on the chassis and the rear lifting point 29 engages with the rear lifting apparatus 12 on the chassis. The engagement knuckle fixing 30 incorporated into each side of the load slots into the corresponding slot 27 near the suspension arm pivot 16 (see figures 2 and 3) on the chassis bracing the open 'U' shaped chassis and, thus, adding rigidity to the U frame and strengthening the structure in transit. Each engagement knuckle fixing 30 incorporated into the side of the load is typically located towards the middle / centre of the load.

In use, the front and rear lifting apparatus 9 and 12 (see figures 2 and 3) enable boxes and other loads to be picked up and dropped off quickly and easily. The lifting apparatus 9 and 12 are always clear of the ground in both the raised and lowered configurations. As the lifting apparatus is raised, it engages with the attachment points located on the sides of the load. This action lifts the load so that it is suspended from the front and rear lifting apparatus. The engagement knuckle fixings 30 incorporated into each side of the load l slot into the corresponding slots 27 on the chassis adding further support for the load and bracing the U frame chassis. As the lifting apparatus is lowered, it is lowered until the load is deposited on the ground. The lowering action is continued until the lifting apparatus 9 and 12 disengages with the attachment points located on the side of the load. Therefore, enabling the vehicle to drive away from the load once the load has been deposited on to the ground, without any subsequent actions to the vehicle or load.

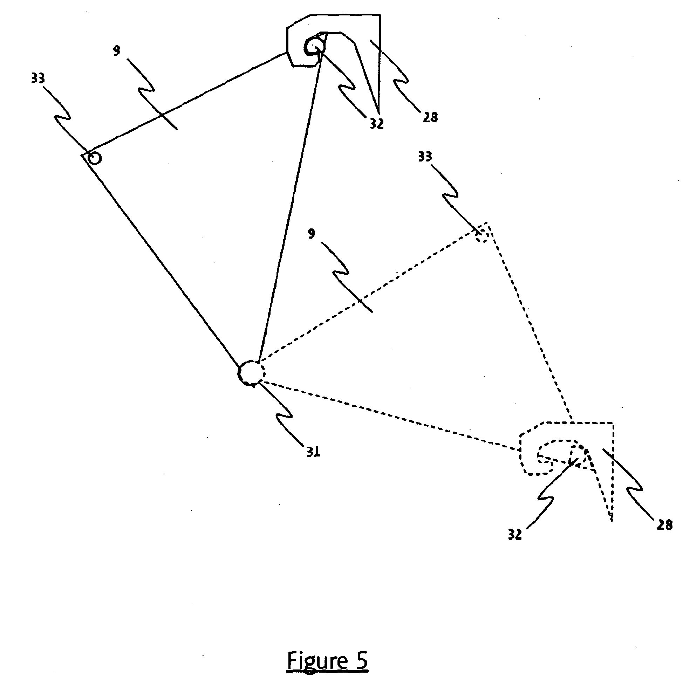

Figure 5 shows a side view of the substantially triangular lifting apparatus 9. The solid lines show the apparatus in its raised position and the dashed lines show the lowered position. The main pivot connection to the chassis 31 and pivoted attachment to the connection bar 33 are show along with the lifting engagement apparatus 32. The lifting engagement apparatus 32 is a circular cross sectioned bar with a flat cut on one side. The lifting engagement apparatus 32 engages with the hook shaped lifting point on the load 28 as the lifting apparatus 9 rotates. As the lifting apparatus 9 rotates into the raised position the lifting engagement apparatus 32 rotates in relation to the hook shaped lifting point on the load 28 and in the raised position the flat on the lifting engagement apparatus 32 rests against the lower part of the front of the hook. This locks the load in position for transit.

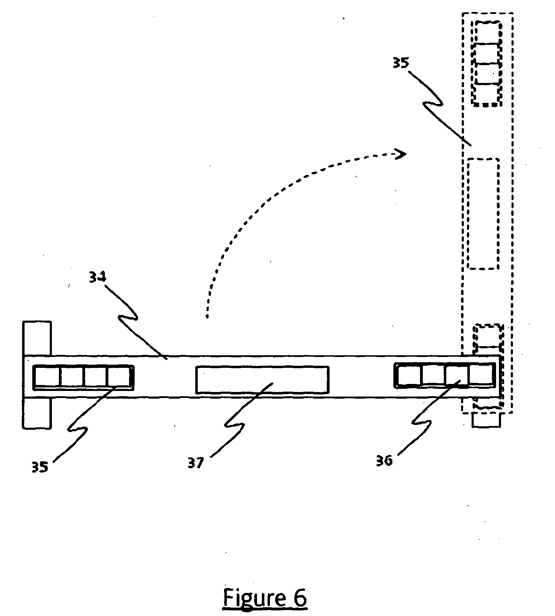

Figure 6 shows the supporting bar member 34 pivoted at the rear on the driver's side of the vehicle. This supporting bar 34 in its lowered position shown in solid lines braces the open end of the U frame at the rear of the chassis during transit and provides under run protection when the vehicle is not carrying a load. The supporting bar member 34 has a U shaped cross section mounted with the open side facing backwards which allows rear facing lights and number plates to be accommodated inside the U for protection. In operation the supporting bar member 34 pivots on the driver's side of the vehicle, the weight of the supporting bar member 34 is supported by a spring which in one embodiment is in the form of a gas strut. The supporting bar member 34 is held in the vertical position by the spring to allow access to the inside of the chassis. A latch secures the supporting bar member 34 in its horizontal lowered position for transit.

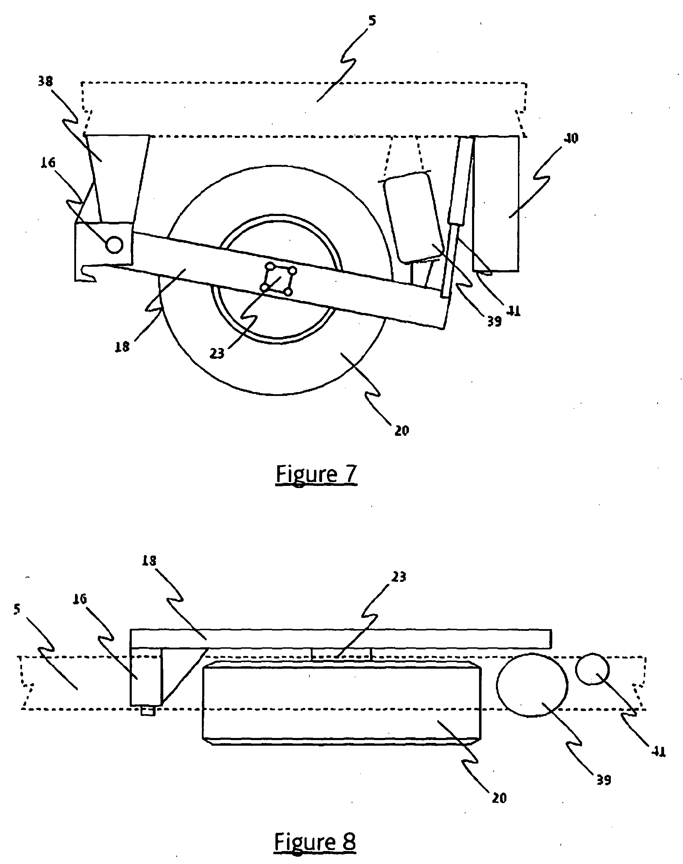

Figure 7 shows a close up view of the wheel mount assembly shown in Figures 1 to 3. The wheel 20 is attached to a suspension arm 18 via a wheel attachment mechanism, such as a stub axel 23. The suspension arm 18 is attached at its forward end via the pivot 16 to the supporting strut 38 of the chassis 1. The rear end of the suspension arm 18 is connected to the trailing supporting member 5 via a spring 39, in this embodiment an air spring, and a damping suspension member 41 positioned close to where the rear lifting apparatus support pillar 40 attaches to the trailing supporting member 5.

Figure 8 shows an upper cross-sectional view of the wheel mount assembly, shown in Figures 1 to 3 and 7. The stub axel mount 23 is attached to the suspension arm 18 in an offset position from the centre of the wheel 20. The wheel 20 is attached within the recess formed between the suspension arm 18, its pivot assembly 16 and its suspension assembly 39 and 41 to ensure balance and minimising the protrusion of the wheel assembly into the carrying space of the chassis 1. The offset position of the wheel 20 within the chassis 1, also minimises the protrusion of the wheel 20 outside the chassis 1 and effectively decreases the width of the vehicle.

In use, the stub axel wheel mounts enable safe, strong wheel mounting to support weights of over 1.5 tonnes per wheel with effective suspension containing the entire wheel and wheel mount within a 30cm width. This makes possible the lowering of loads up to 1.9 metres wide to the ground, whilst also permitting the load to be carried at a low height.

The technical effect of the vehicle chassis is to provide a means carrying interchangeable loads, within the footprint of the vehicle, which can be dropped off for loading and storage, while the vehicle is being used for other deliveries.

The objective technical problem of the vehicle chassis can therefore be defined as how to improve the safety and efficiency of a delivery vehicle in dropping off and collecting multiple loads.

A further second technical effect of the facility for ground level loading is to provide a faster and safer means of loading and unloading goods, avoiding the dangers of working at heights and avoiding the delays that multiple operations of a tail lift incur.

A further third technical effect of the 'U' shaped chassis is that the load does not have to be positioned above the rear axle allowing the load floor to be closer to the ground in transit and so achieving a lower vehicle height for a given load height. This enables the vehicle to access more locations with restricted height access.

## Claims

1. A substantially 'U' shaped vehicle chassis (1), with an openable end facing to the rear; wherein the area bounded by the chassis footprint is substantially free of any obstruction impeding the lifting and lowering of the load in use; the chassis comprising a plurality of rotating lifting arms (9, 10, 11, 12), pivoted at one end with the non-pivoted ends which engage respective corresponding pick-up points (28, 29) on a load; the rotating lifting arms engage a load in a first position and deposit said load on said chassis in a second position;, **characterised in that** the chassis is attached, in use, by means of a fixed rigid connection to a vehicle cabin for travel, said fixed rigid connection comprising a first attachment member (3, 4) defined by the chassis and co-operable with a second attachment member defined by a vehicle cabin, and which chassis provides an engagement bracket (27), close to the chassis wheels (20, 21), for a knuckle fitting (30), incorporated into each side of the load, to engage, and **characterised in that** the plurality of rotating lifting arms comprise four rotating lifting arms

2. A vehicle chassis (1) in accordance with claim 1, wherein each rotating lifting arm (9, 10, 11, 12) is substantially triangular in shape and is pivotally attached to the chassis substantially towards a first vertex ; a connecting member (14) is pivotally attached to the rotating lifting arm substantially towards a second vertex; an engagement means is disposed substantially towards a third vertex, which in use, engages and disengages with the load.

3. A vehicle chassis (1) in accordance with claim 2, wherein connecting member (14, 15) is pivotally attached at one end to a first rotating lifting arm (9, 10, 11, 12) substantially towards one vertex and the opposite end of the connecting member is pivotally attached to a second rotating lifting arm substantially towards one vertex, which in use, synchronises the rotational movement of the first rotating lifting arm to the second rotating lifting arm.

4. A vehicle chassis (1) in accordance with claim 2, wherein each rotating lifting arm (9, 10, 11, 12) further incorporates a lever member attached at one substantially towards the first vertex and the opposite end is attached to an actuator device (25).

5. A vehicle chassis (1) in accordance with claim 2, wherein the engagement means (32) disposed on each rotating lifting arm (9, 10, 1, 12) is a substantially circular cross sectioned bar which incorporates a flat portion, which in use, engages with a flat portion incorporates within the engagement bracket (28) of each pick up point of the load.

6. A vehicle chassis (1) in accordance with any of the previous claims, wherein said chassis mounted engagement bracket (27) is in the form of a slot for engagement of a knuckle fitting (30), incorporated into each side of the load.

7. A corresponding load interface, to be built into a load or load platform to enable it to be engaged by the chassis (1) in claim 1 and deposited on said chassis, such interface incorporating four pick-up points (28) which correspond to the chassis rotating lifting arm (9, 10, 11, 12) non-pivoted ends and a knuckle fitting (30), incorporated into each side of the load or load platform.

8. A corresponding load interface in accordance with claim 7, wherein each of the four pick-up points (28) is substantially a hook configuration.

9. A corresponding load interface in accordance with claims 5 and 7, wherein the hook configuration incorporates a flat portion, which in use, engages with a flat portion incorporated within the engagement means disposed on each lifting arm (9, 10, 11, 12).

10. A corresponding load interface in accordance with claim 7, wherein each said knuckle fitting (30)is substantially mushroom shaped and whereby each said knuckle fitting incorporates a narrow section between the mushroom and the load to engage in the corresponding slot in the vehicle chassis (1), which in use, restricts the relative sideways movements of the load or load platform and the chassis.

11. A corresponding load interface in accordance with any of the claims 7 to 10, wherein each said knuckle fitting (30) is located substantially at the middle of each side of the load.

12. A vehicle chassis (1) in accordance with claim 1, further comprising a pivoted supporting member (34) disposed across said openable end configuration.

## Patentansprüche

1. Ein im Wesentlichen u-förmiges Fahrzeuggestell (1), mit einem öffenbaren Ende, das zur Rückseite zeigt; wobei der Bereich, der von der Gehäuse-Standfläche begrenzt wird, im Wesentlichen frei von Hindernissen ist, die das Heben und Senken der Last im Einsatz verhindern könnten; das Gehäuse weist dabei eine Vielzahl von rotierenden Hebelarmen (9, 10, 11, 12) auf, die an einem Ende drehbar zu den nicht drehbaren Enden gelagert sind, die jeweils entsprechende Aufnahmepunkte (28, 29) in eine Last einrasten lassen; die rotierenden Hebelarme nehmen eine Last in einer ersten Position auf und legen besagte Last auf dem Gestell in einer zweiten Position ab; **dadurch gekennzeichnet, dass** das Gestell im Einsatz über eine feste, starre Verbindung mit einer verfahrbaren Fahrzeugkabine verbunden ist, die besagte feste, starre Verbindung weist ein erstes Verbindung-Teil (3, 4) auf, das vom Gestell definiert wird, und mit einem zweiten Verbindungs-Teil bedienbar ist, das von einer Fahrzeugkabine definiert wird, und dessen Gestell eine Einrasthalterung (27) nahe der Gehäuse-Räder (20, 21) für einen Gelenkbolzen (30) bietet, der auf jeder Seite der Last vorhanden ist und einrastet, **dadurch gekennzeichnet, dass** die Vielzahl der rotierenden Hebelarme vier rotierende Hebelarme sind

2. Ein Fahrzeuggestell (1) gemäß Anspruch 1, wobei jeder rotierende Hebelarm (9, 10, 11, 12) im Wesentlichen dreieckig in der Form und drehbar am Gestell, im Wesentlichen hin zu einem ersten Eckpunkt, befestigt ist; ein Verbindungs-Teil (14) ist dabei drehbar mit dem rotierenden Hebelarm verbunden, im Wesentlichen hin zu einem zweiten Eckpunkt; eine Einrastvorrichtung ist im Wesentlichen hin zu einem dritten Eckpunkt angebracht, die sich im Einsatz mit der Last verbindet oder davon löst.

3. Ein Fahrzeuggestell (1) gemäß Anspruch 2, wobei das Verbindungs-Teil (14, 15) drehbar an einem Ende des ersten rotierenden Hebelarms (9, 10, 11, 12) befestigt ist, im Wesentlichen hin zu einem ersten Eckpunkt; das gegenüberliegende Ende des Verbindungs-Teils ist drehbar mit dem zweiten rotierenden Hebelarm verbunden, im Wesentlichen hin zu einem Eckpunkt, der im Einsatz die Drehbewegung des ersten rotierenden Hebelarms mit dem zweiten rotierenden Hebelarm synchronisiert.

4. Ein Fahrzeuggestell (1) gemäß Anspruch 2, wobei jeder rotierende Hebelarm (9, 10, 11, 12) darüberhinaus ein Hebel-Teil umfasst, das im Wesentlichen zum ersten Eckpunkt befestigt ist und das gegenüberliegende Ende an einer Aktuatorvorrichtung (25) befestigt ist.

5. Ein Fahrzeuggestell (1) gemäß Anspruch 2, wobei die Einrastvorrichtung (32), die an jedem rotierenden Hebelarm (9, 10, 11, 12) vorhanden ist, im Wesentlichen eine Stange mit einem Kreisquerschnitt ist, die einen ebenen Teil enthält und sich im Einsatz mit einem ebenen Teil verbindet, der in der Einrasthalterung (28) jedes Aufnahmepunktes der Last vorhanden ist.

6. Ein Fahrzeuggestell (1) gemäß eines der vorhergehenden Ansprüche, wobei die besagte am Gestell montierte Einrasthalterung (27) die Form eines Schlitzes hat, um einen Gelenkbolzen (30), der an jeder Seite der Last vorhanden ist, einrasten zu lassen.

7. Eine entsprechende Lastschnittstelle, die in eine Last oder Lastplattform eingebaut ist, damit diese vom Gestell (1) in Anspruch 1 gegriffen und auf besagtem Gestell abgelegt werden kann, diese Schnittstelle umfasst dabei vier Aufnahmepunkte (28), die mit den nicht drehbar gelagerten Enden der rotierenden Gestell-Hebelarme (9, 10, 11, 12) und einem Gelenkbolzen (30) übereinstimmen, die auf jeder Seite der Last oder Lastplattform vorhanden sind.

8. Eine entsprechende Lastschnittstelle gemäß Anspruch 7, wobei jeder der vier Aufnahmepunkte (28) im Wesentlichen eine Haken-Konfiguration darstellt.

9. Eine entsprechende Lastschnittstelle gemäß Anspruch 5 und 7, wobei in der Haken-Konfiguration ein ebener Teil vorhanden ist, der sich im Einsatz mit einem ebenen Teil verbindet, der in der Einrastvorrichtung an jedem Hebelarm (9, 10, 11, 12) angebracht ist.

10. Eine entsprechende Lastschnittstelle gemäß Anspruch 7, wobei jeder Gelenkbolzen (30) im Wesentlichen eine Pilzform hat und wodurch jeder der besagten Gelenkbolzen einen schmalen Abschnitt zwischen dem Pilz und der Last bildet, um in den entsprechenden Schlitz im Fahrzeuggestell (1) einzurasten, was im Einsatz die jeweiligen Seitenbewegungen der Last oder der Lastplattform und des Gestells beschränkt.

11. Eine entsprechende Lastschnittstelle gemäß eines der Ansprüche 7 bis 10, wobei die Gelenkbolzen (30) im Wesentlichen in der Mitte jeder Lastseite positioniert sind.

12. Ein Fahrzeuggestell (1) gemäß Anspruch 1, das darüberhinaus ein drehbar gelagertes Stütz-Teil (34) aufweist, das quer über die besagte offenbare End-Konfiguration verläuft.

## Revendications

1. Châssis de véhicule sensiblement en forme de U (1), comportant une extrémité ouvrante faisant face à l'arrière ; la zone limitée par l'empreinte du châssis étant substantiellement exempte de tout obstacle empêchant le levage et l'abaissement de la charge en cours d'utilisation ; le châssis comprenant une pluralité de bras de levage tournants (9, 10, 11, 12), pivotés à une extrémité avec les extrémités non pivotées qui s'engagent dans des points de récupération correspondants respectifs (28, 29) sur une charge ; les bras de levage tournants s'engageant dans une charge dans une première position et déposant ladite charge sur ledit châssis dans une seconde position ; **caractérisé en ce que** le châssis est fixé, en cours d'utilisation, au moyen d'une connexion rigide fixe, à une cabine de véhicule de transport, ladite connexion rigide fixe comprenant un premier élément de fixation (3, 4) défini par le châssis et co-actionnable avec un second élément de fixation défini par une cabine de véhicule, et lequel châssis comporte une console d'engagement (27) proche des roues du châssis (20, 21) pour un raccord à rotule (30) intégré dans chaque face de la charge pour l'engagement, et **caractérisé en ce que** la pluralité de bras de levage tournants comprend quatre bras de levage tournants

2. Châssis de véhicule (1) selon la revendication 1, dans lequel chaque bras tournant (9, 10, 11, 12) a une forme sensiblement triangulaire et est attaché de manière à pouvoir pivoter au châssis sensiblement en direction d'un premier vertex ; un élément de connexion (14) est attaché de manière à pouvoir pivoter au bras de levage tournant sensiblement en direction d'un deuxième vertex ; un moyen d'engagement est disposé sensiblement en direction d'un troisième vertex qui, en cours d'utilisation, s'engage et se désengage dans la charge.

3. Châssis de véhicule (1) selon la revendication 2, dans lequel l'élément de connexion (14, 15) est fixé de manière à pouvoir pivoter à une extrémité d'un premier bras de levage tournant (9, 10, 11, 12) sensiblement en direction de intertexte et l'extrémité opposée de l'élément de connexion est attachée de manière à pouvoir pivoter à un second bras de levage tournant sensiblement en direction d'un vertex qui, à l'utilisation, synchronise le mouvement de rotation du premier bras de levage tournant et du second bras de levage tournant.

4. Châssis de véhicule (1) selon la revendication 2, dans lequel chaque bras de levage tournant (9, 10, 11, 12) englobe en outre un élément levier attaché à une extrémité sensiblement en direction du premier vertex et que l'extrémité opposée est attachée à un dispositif actionneur (25).

5. Châssis de véhicule (1) selon la revendication 2, dans lequel le moyen d'engagement (32) disposé sur chaque bras de levage tournant (9, 10, 11, 12) est une barre de section transversale sensiblement circulaire qui comporte une partie plate qui, en cours d'utilisation, s'engage dans une partie plate intégrée dans la console d'engagement (28) de chaque point de récupération de la charge.

6. Châssis de véhicule (1) selon l'une quelconque des revendications précédentes, dans lequel ladite console d'engagement montée sur le châssis (27) prend la forme d'une fente permettant d'y engager un raccord à rotule (30) intégré dans chaque face de la charge.

7. Interface de charge correspondante destinée à être intégré dans une charge ou plate-forme de charge afin de permettre d'y engager le châssis (1) selon la revendication 1 et de la déposer sur ledit châssis, cette interface comprenant quatre points de récupération (28) qui correspondent aux extrémités non pivotées du bras de levage tournant du châssis (9, 10, 11, 12) et un raccord à rotule (30) intégré dans chaque face de la charge ou plate-forme de charge.

8. Interface de charge correspondante selon la revendication 7, dans lequel chacun des quatre points de récupération (28) est sensiblement une structure en crochet.

9. Interface de charge correspondante selon les revendications 5 et 7, dans laquelle la structure en crochet comprend une partie plate qui, en cours d'utilisation, s'engage dans une partie plate intégrée dans le moyen d'engagement disposé sur chaque bras de levage (9, 10, 11, 12).

10. Interface de charge correspondante selon la revendication 7, dans laquelle chaque raccord à rotule (30) a sensiblement une forme de champignon et dans laquelle chaque raccord à rotule comprend une section étroite entre le champignon et la charge" cette section étant destinée à être engagée dans la fente correspondante du châssis du véhicule (1) et restreignant, en cours d'utilisation, les mouvements latéraux relatifs de la charge ou de la plate-forme de charge et du châssis.

11. Interface de charge correspondante selon l'une quelconque des revendications 7 à 10, dans lequel chaque raccord à rotule (30) est positionné sensiblement au milieu de chaque face de la charge.

12. Châssis de véhicule (1) selon la revendication 1, comprenant en outre un élément support pivoté (34) disposé en travers de ladite structure terminale ouvrante.
